# EUROPEAN PATENT APPLICATION

(11) **EP 3 002 721 A1**
(43) Date of publication of application: **06.04.2016**
(21) Application number: 15185911.3
(22) Date of filing: 18.09.2015
(51) Int. Cl.: G06Q 20/20, G07G 1/00, G06K 9/20, G06Q 20/40

(54) **SCANNER APPARATUS AND METHOD FOR OUTPUTTING IMAGE BY THE SAME**

(30) Priority: 25.09.2014 JP 2014195591
(71) Applicant: Toshiba TEC Kabushiki Kaisha, Tokyo 141-0032 (JP)
(72) Inventor: NAITO, Hidehiro, Shinagawa-ku, Tokyo 141-0032 (JP)
(74) Representative: Takeuchi, Maya

(57) **Abstract**

A scanner apparatus comprises an image capturing module, a connection module configured to be capable of connecting with an external information processing apparatus, an output module configured to output an image captured by the image capturing module to the information processing apparatus, and a control module configured to suppress output of the captured image until a first command is input from the information processing apparatus and to output the captured image through the output module if the first command is input from the information processing apparatus.

## Description

### FIELD

Embodiments described herein relate generally to a scanner apparatus and a method for outputting a captured image by the scanner apparatus.

### BACKGROUND

Conventionally, there is a technology in which the feature amount of an object extracted from an image (captured image) obtained by photographing the object is compared with the feature amount for comparison that is pre-registered in a dictionary to obtain a similarity degree therebetween to recognize the category of the object according to the similarity degree. Moreover, a system in which such a technology relating to an object recognition is applied to the recognition of a commodity such as vegetables and fruits and the recognized commodity is sales-registered is proposed. The system is constituted by connecting a scanner apparatus (image capturing apparatus) which photographs a commodity with an information processing apparatus (e.g., a PC) which carries out recognition of the commodity.

Incidentally, the captured image output from the scanner apparatus contains technical confidential items such as an image capturing condition, an image processing method and the like. However, in a case of carrying out the output of captured image using a general communication standard, the confidential items will leak out accidentally since it is also possible to acquire the captured image with other machines which conform to the communication standard. Thus, a technology capable of restricting the output of the captured image is required.

### BRIEF DESCRIPTION OF THE DRAWINGS

Fig. 1 is a perspective view illustrating an example of a checkout system according to an embodiment;
Fig. 2 is a block diagram illustrating hardware constitutions of a commodity reading apparatus and a commodity settlement apparatus;
Fig. 3 is a diagram schematically illustrating an example of data arrangement of a PLU file;
Fig. 4 is a block diagram illustrating functional components of the commodity reading apparatus;
Fig. 5 is a block diagram illustrating functional components of the commodity settlement apparatus;
Fig. 6 is a diagram illustrating an example of the display of a commodity candidate screen displayed on a display and operation section of the commodity reading apparatus; and
Fig. 7 is a flowchart illustrating an example of a sales registration processing executed by the commodity reading apparatus and the commodity settlement apparatus.

### DETAILED DESCRIPTION

In accordance with an embodiment, a scanner apparatus comprises an image capturing module configured to perform an image capturing operation, a connection module configured to be capable of connecting with an external information processing apparatus, an output module configured to output an image captured by the image capturing module to the information processing apparatus, and a control module configured to suppress output of the captured image until a first command is input from the information processing apparatus and to output the captured image through the output module if the first command is input from the information processing apparatus.

Preferably, the control module enables the output module to output the captured image if the first command is input from the information processing apparatus, and returns to a state in which no first command is input if a second command is input from the information processing apparatus.

Preferably, the control module enables the output module to output a dummy image different from the captured image until the first command is input.

Preferably, the control module enables the output module to output a dummy image different from the captured image until the first command is input.

Preferably, the control module returns to a state in which no first command is input if the connection module is offline while the captured image is being output.

Preferably, the control module enables the image capturing module to start the image capturing operation in response to the input of the first command.

The present invention further relates to a method for outputting a captured image by a scanner apparatus capable of connecting with an information processing apparatus, including: outputting the captured image to the information processing apparatus; suppressing output of the captured image until a first command is input from the information processing apparatus; and outputting the captured image if the first command is input from the information processing apparatus.

Hereinafter, taking a checkout system as a non-limiting example, a scanner apparatus according to the present embodiment is described with reference to the accompanying drawings. A store system is a checkout system (POS system) comprising a POS terminal for registering and settling commodities in one transaction. The present embodiment is an example of application to a checkout system introduced to a store such as a supermarket and the like.

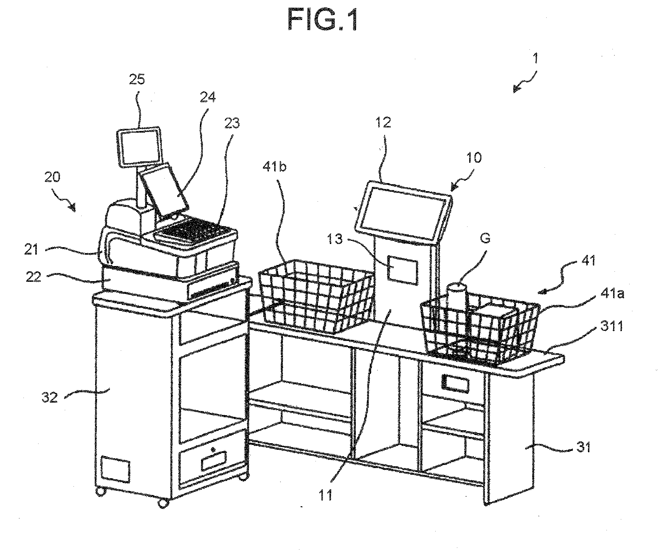

Fig. 1 is a perspective view illustrating an example of a checkout system 1. As shown in Fig. 1, the checkout system 1 comprises a commodity reading apparatus 10 and a commodity settlement apparatus 20. In the present embodiment, the commodity reading apparatus 10 is a scanner apparatus, and the commodity settlement apparatus 20 (a POS terminal 21) is an information processing apparatus. Further, it is assumed that the commodity settlement apparatus 20 is a normal or regular information processing apparatus that is allowed to be connected with the commodity reading apparatus 10.

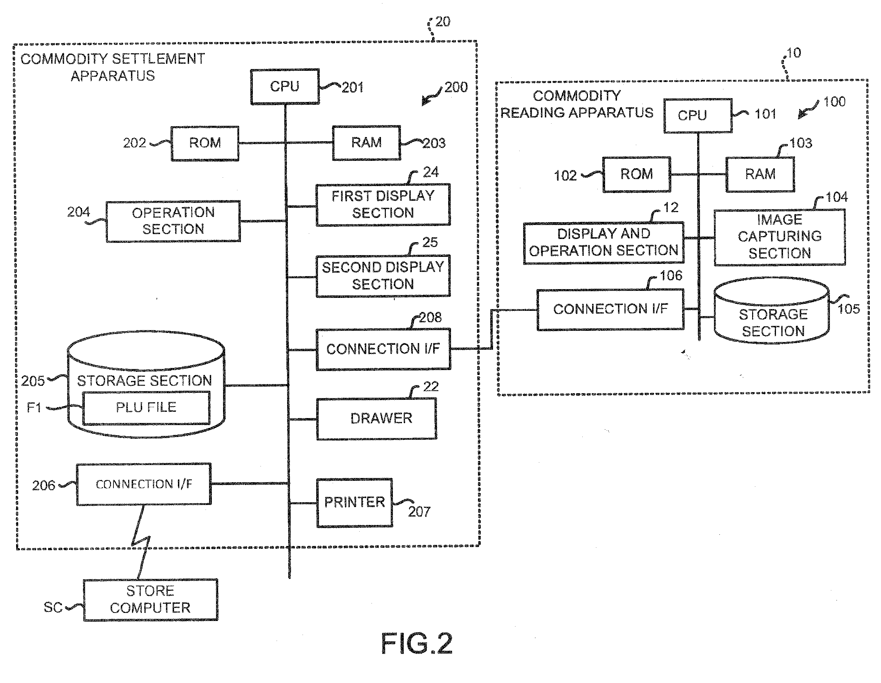

The commodity reading apparatus 10, which is arranged at the center of a counter table 31, comprises a housing 11 and a display and operation section 12. The housing 11 is formed in a rectangular shape, and a reading window 13 is arranged at the center of the surface of the housing 11 facing an operator. A later-described image capturing section 104 (refer to Fig. 2) is arranged in the rear side of the reading window 13.

The display and operation section 12 is installed at the upper portion of the housing 11. The display and operation section 12 displays characters, images and the like under the control of a later-described CPU 101 (refer to Fig. 2). Further, the display and operation section 12 receives an operation input of the operator who operates the commodity reading apparatus 10. For example, a touch panel display may be used as the display and operation section 12.

A receiving surface 311 is formed on the counter table 31. Shopping basket 41 which receives a commodity G therein is placed on the receiving surface 311. Shopping basket 41 includes a first shopping basket 41a brought to the counter table 31 by a customer and a second shopping basket 41b placed facing the first shopping basket 41a across the commodity reading apparatus 10. Further, the shape of the shopping basket 41 is not limited to a so-called basket, and it may be a tray, a box, a bag, and the like.

Commodities G purchased in one transaction are put in the first shopping basket 41a. The commodities G in the first shopping basket 41a are moved one by one to the second shopping basket 41b by the operator who operates the commodity reading apparatus 10. During the movement, the commodity G is held to the reading window 13 of the commodity reading apparatus 10. At this time, the image capturing section 104 (refer to Fig. 2) arranged in the reading window 13 captures an image of the commodity G held by a hand of a user (hereinafter referred to as the operator including the operator of apparatus).

On the other hand, the commodity settlement apparatus 20 is arranged on a checkout table 32 which is arranged in an L-shape adjacent to the counter table 31. The commodity settlement apparatus 20 includes the POS terminal 21 and a drawer 22, and the POS terminal 21 is placed on the drawer 22. The drawer 22 stores bills and coins, and is opened or closed under the control of the POS terminal 21.

A keyboard 23 that is press-operated by the operator is arranged on the upper surface of the POS terminal 21. The keyboard 23 includes numeric keys on which numeric characters '1', '2', '3', ... and operators such as a multiplying operator "*" are displayed, a temporary closing key and a closing key (none is shown).

The POS terminal 21 further comprises a first display section 24 and a second display section 25 which is vertically arranged in a rotatable manner. The first display section 24 and the second display section 25 display information such as characters, images and the like under the control of a later-described CPU 201 (refer to Fig. 2). The first display section 24 is arranged towards the operator who operates the keyboard 23 to display information to the operator. The second display section 25 is rotated to face the rear side in Fig. 1, and thus mainly displays information to the customer. Further, the first display section 24 may adopt a constitution of a touch panel display to be used as a later-described operation section 204.

With the constitutions described above, the POS terminal 21 recognizes the photographed commodity G by the commodity settlement apparatus 20, and registers information such as a commodity category, a commodity name, a unit price of the commodity G in a sales master file (not shown). Further, in the POS terminal 21, a total amount of one transaction is calculated according to the unit price and the number of sales of each commodity in one transaction, and a settlement processing is carried out based on the calculated total amount.

Next, the constitutions of the commodity reading apparatus 10 and the commodity settlement apparatus 20 are described. Fig. 2 is a block diagram illustrating the hardware constitutions of the commodity reading apparatus 10 and the commodity settlement apparatus 20.

As shown in Fig. 2, the commodity reading apparatus 10 comprises a microcomputer 100 which executes information processing. The microcomputer 100 mainly consists of a CPU (Central Processing Unit) 101, a ROM (Read Only Memory) 102, and a RAM (Random Access Memory) 103. The ROM 102 stores various programs that can be executed by the CPU 101. The RAM 103 is a primary storage device of the commodity reading apparatus 10.

The image capturing section 104 is connected with the CPU 101 of the commodity reading apparatus 10. The image capturing section 104 is an image capturing device such as a color CCD image sensor, a color CMOS image sensor and the like. For example, motion images are captured by the image capturing section 104 at a frame rate, for example, 30fps under the control of the CPU 101. The images captured by the image capturing section 104 are stored in the RAM 103 sequentially under the control of the CPU 101.

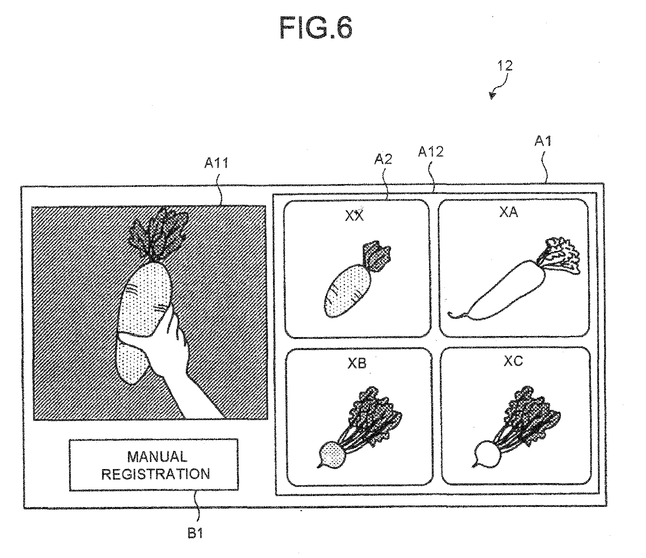

Further, the aforementioned display and operation section 12 is connected to the CPU 101 of the commodity reading apparatus 10. The operations of each part of the display and operation section 12 are controlled by the CPU 101 and the CPU 201 of the POS terminal 21. For example, the display and operation section 12 displays various screens such as a commodity candidate screen (refer to Fig. 6) described later under the control of the CPU 101 and the CPU 201.

Further, a storage section 105 is connected to the CPU 101 of the commodity reading apparatus 10. The storage section 105 is a storage device such as an HDD (Hard Disk Drive), an SSD (Solid State Drive) and the like. The storage section 105 stores various programs and various files.

A connection I/F 106 is connected to the CPU 101 of the commodity reading apparatus 10. The connection I/F 106 is an interface for realizing a data communication with an external device such as the POS terminal 21. Further, no limitation is given to the connection standard of the connection I/F 106, for example, a general standard such as a USB (Universal Serial Bus) standard may be used.

On the other hand, the commodity settlement apparatus 20 comprises a microcomputer 200 which executes information processing in the POS terminal 21. The microcomputer 200 mainly consists of a CPU 201, a ROM 202, and a RAM 203. The ROM 202 stores various programs that can be executed by the CPU 201. The RAM 203 is a primary storage device of the POS terminal 21.

The drawer 22, the first display section 24 and the second display section 25 mentioned above are connected to the CPU 201 of the commodity settlement apparatus 20. Further, the operation section 204 is connected to the CPU 201 of the commodity settlement apparatus 20. Such an operation section 204 is the keyboard 23 mentioned above or a touch panel arranged on the first display section 24.

Further, a storage section 205 such as an HDD, an SSD and the like is connected to the CPU 201 of the commodity settlement apparatus 20. The storage section 205 stores various programs and various files. For example, the storage section 205 stores a PLU file F1. The PLU file F1 is a commodity file in which information relating to the sales registration of the commodity G is stored for each of the commodities G sold in the store. Further, the PLU file F1 stores feature amount indicating the external features of each of the commodities G. The feature amount is obtained by parameterizing the external features such as standard shape, surface hue, pattern, concave-convex state and the like of a commodity.

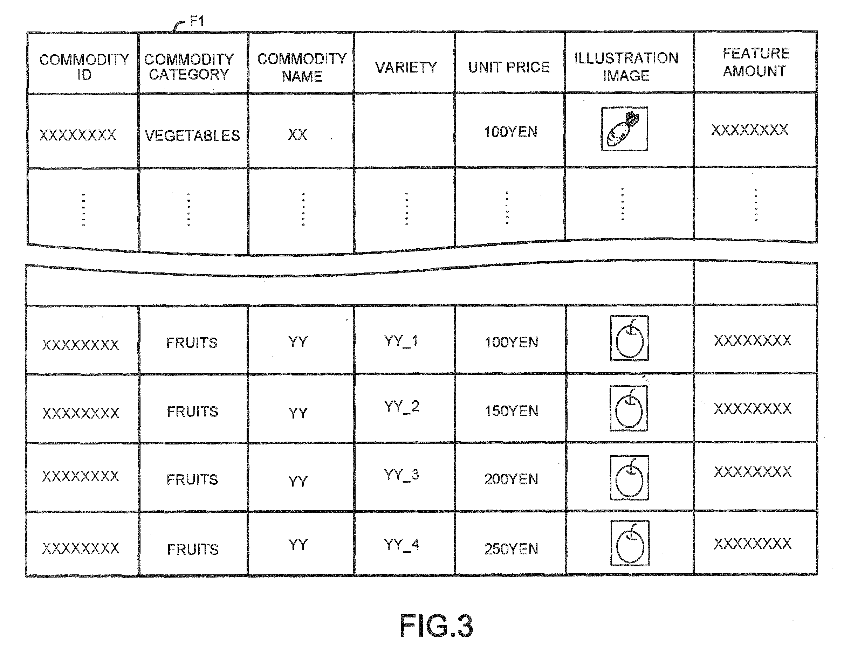

Fig. 3 is a diagram schematically illustrating an example of data arrangement of the PLU file F1. As shown in Fig. 3, the PLU file F1 stores commodity information of each commodity G sold in the store. The commodity information includes information relating to a commodity such as a commodity ID (identification information) uniquely assigned to each commodity G, a commodity category to which the commodity G belongs, a commodity name and a unit price. The commodity information further includes an illustration image indicating the commodity G and the feature amount of the commodity G. Such a feature amount can be used as a data for comparison in the similarity degree determination described later.

Returning to Fig. 2, a communication I/F 206 is connected to the CPU 201 of the commodity settlement apparatus 20. The communication I/F 206 is an interface for realizing a data communication with a store computer SC. For example, the store computer SC carries out the distribution of the PLU file F1 to each of the commodity settlement apparatuses 20 (POS terminal 21).

Further, a printer 207 is connected to the CPU 201 of the commodity settlement apparatus 20. The printer 207 carries out a printing on a given paper such as a receipt paper. For example, the printer 207 prints information indicating the content of one transaction on a receipt paper under the control of the CPU 201.

Furthermore, a connection I/F 208 is connected to the CPU 201 of the commodity settlement apparatus 20. The connection I/F 208 is an interface for realizing the data communication with an external device such as the commodity reading apparatus 10. Further, it is assumed that the connection standard of the connection I/F 208 is in accordance with the connection standard of the connection I/F 106 of the commodity reading apparatus 10.

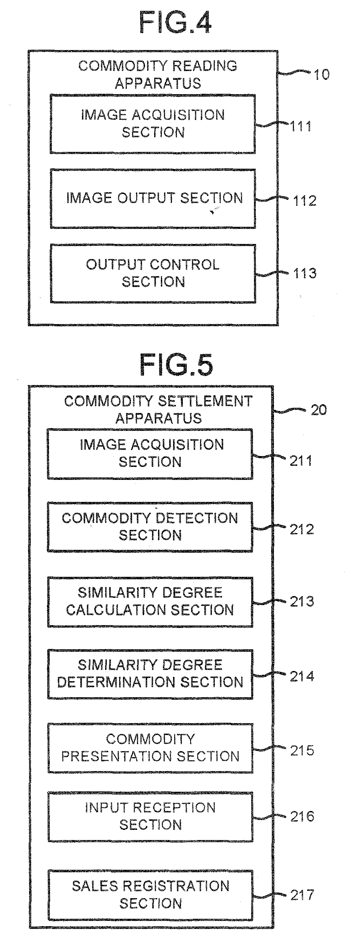

Further, the functional components of the commodity reading apparatus 10 are described with reference to Fig. 4. Fig. 4 is a block diagram illustrating the functional components of the commodity reading apparatus 10. The commodity reading apparatus 10 comprises the functional sections shown in Fig. 4 through the cooperation of the CPU 101 and the programs stored in the ROM 102 and the storage section 105.

An image acquisition section 111 is a functional section for acquiring the image captured by the image capturing section 104. Specifically, the image acquisition section 111 sequentially acquires the captured images which are captured by the image capturing section 104 and stores them in the RAM 103. Further, the image acquisition section 111 may perform an image processing on a captured image at the time of acquiring the captured image. For example, in a case in which the captured image of the image capturing section 104 is shown in a bayer method, the image acquisition section 111 converts the captured image into an RGB image or a YUV image.

An image output section 112 outputs the captured image acquired by the image acquisition section 111 to the commodity settlement apparatus 20 through the connection I/F 106. Specifically, the image output section 112 outputs the captured images stored in the RAM 103 sequentially. Further, no limitation is given to the output method and output system of the captured image, for example, a general communication standard such as a USB video class may be used.

Incidentally, the captured image output from the commodity reading apparatus 10 contains technical confidential items such as an image capturing condition, an image processing method and the like. The confidential items indicate information that can be obtained directly or indirectly from the captured image such as shutter time of the image capturing section 104, illumination (not shown) and background state, category and condition of image processing, and the like. However, in a case of carrying out the output of captured image in accordance with a general communication standard, the confidential items leak out accidentally since it is also possible to acquire the captured image with a machine other than the POS terminal 21 conforming to the communication standard. Thus, a technology capable of restricting the output of the captured image is required.

Thus, in the commodity reading apparatus 10 of the present embodiment, the output of captured image is restricted through the function of the output control section 113. Specifically, in a case of receiving an input of a first command (hereinafter referred to as an enable command) via the connection I/F 208, the output control section 113 enables the image output section 112 to output a captured image. Further, in a state in which the enable command is not being input (hereinafter referred to as a default state), the output control section 113 enables the image output section 112 to output a dummy image to suppress the output of captured image. For example, the dummy image may be a monochrome image, a screen saver image, an image including a message "please use dedicated machine" for drawing operator's attention, and the like.

Further, in a case of receiving an input of a second command (hereinafter referred to as a disable command), the output control section 113 returns to the default state to suppress the output of the captured image. Further, the output control section 113 monitors the state of the connection I/F 106, and returns to the default state to suppress the output of the captured image if the offline of the connection I/F 106 is detected. In addition, the output control section 113 determines as offline in a case in which the communication with the external apparatus (the commodity settlement apparatus 20) cannot be carried out.

Herein, it is assumed that the enable command and the disable command are output from a normal or regular information processing apparatus (the commodity settlement apparatus 20) that is allowed to be connected with the commodity reading apparatus 10. The normal or regular information processing apparatus comprises a later-described image acquisition section 211 that is capable of outputting the enable command and the disable command, and notifies the commodity reading apparatus 10 of its correctness through the function of the image acquisition section 211. In this way, in the commodity reading apparatus 10, since the output destination of the captured images can be restricted to the normal or regular information processing apparatus, it is possible to prevent the confidential items from being leaked out.

Further, the output control section 113 may stop the operation of the image capturing section 104 or the image acquisition section 111 during the default state to control such that the captured image is not generated. In this case, the output control section 113 starts the operation of the image capturing section 104 or the image acquisition section 111 in response to the input of the enable command. Further, the output control section 113 stops the operation of the image capturing section 104 or the image acquisition section 111 in response to the input of the disable command.

Next, the functional components of the commodity settlement apparatus 20 are described with reference to Fig. 5. Fig. 5 is a block diagram illustrating the functional components of the commodity settlement apparatus 20. The commodity settlement apparatus 20 comprises functional sections shown in Fig. 5 through the cooperation of the CPU 201 and the programs stored in the ROM 202 and the storage section 205.

The image acquisition section 211 acquires a captured image (or a dummy image) from the commodity reading apparatus 10 (image capturing section 104) through the connection I/F 208.

Specifically, when receiving an instruction of transaction start via the operation section 204, the image acquisition section 211 outputs the enable command to the commodity reading apparatus 10. Then, the image acquisition section 211 sequentially acquires the captured images input from the commodity reading apparatus 10 (the image output section 112) in response to the output of the enable command. Further, when receiving an instruction of transaction ending via the operation section 204, the image acquisition section 211 outputs the disable command to the commodity reading apparatus 10.

Further, it is exemplified in the present embodiment that the enable command or the disable command is output according to the operation instruction of transaction start or transaction ending, but the timing of output of the commands is not limited to this. For example, the image acquisition section 211 monitors the state of the connection I/F 208, and may output the enable command if the connection with an external apparatus (the commodity reading apparatus 10) is detected.

A commodity detection section 212 detects the whole or part of the commodity G from the captured image acquired by the image acquisition section 211. No limitation is given to the detecting method of the commodity G, and a well-known technology such as a pattern matching technology may be used. For example, the commodity detection section 212 extracts a contour line of an image obtained by binarizing the captured image. Next, the commodity detection section 212 compares the contour line extracted from the last time captured image with the contour line extracted from the this time captured image to detect a commodity directed to the reading window 13.

As another method for detecting a commodity G, the commodity detection section 212 detects whether or not there is a flesh color area corresponding to a hand of the operator from the acquired frame image. If the commodity detection section 212 detects the flesh color area, the commodity detection section 212 carries out the detection of the aforementioned contour line nearby the flesh color area. In this way, the commodity detection section 212 tries to extract the contour of the commodity G that is assumed to be held by the operator. Specifically, if a contour representing the shape of the hand and the contour of an object other than the hand nearby the contour of the hand are detected, the commodity G is detected from the contour of the object.

A similarity degree calculation section 213 extracts, as a feature amount, the surface state (surface hue, concave-convex state and the like) of the commodity G detected by the commodity detection section 212 from the captured image. To reduce the processing time, it is assumed that the contour and the size of the commodity G are not considered by the similarity degree calculation section 213.

Further, the similarity degree calculation section 213 compares the feature amount of each commodity (hereinafter referred to as a registration commodity) registered in the PLU file F1 with the feature amount of the commodity G to calculate a similarity degree between the commodity G and the registration commodity. In a case in which the image of the registration commodity is set to 100%= "similarity degree: 1.0", the similarity degree indicates how much similar all of or part of the image of the commodity G is to the image of the registration commodity. Further, the similarity degree calculation section 213 may change the weight for each category of the feature amounts such as surface hue, surface concave-convex state and the like to calculate the similarity degree.

The recognition of an object contained in an image as stated above is referred to as a general object recognition. As to the general object recognition, for example, various recognition technologies are described in the following document.

Keiji Yanai "Present situation and future of generic object recognition", Journal of Information Processing Society, Vol. 48, No. SIG16 [Search on Heisei 24 September 10], Internet < URL: http://mm.cs.uec.ac.jp/IPSJ-TCVIM-Yanai.pdf>

In addition, the technology carrying out the general object recognition by performing an area-division on the image for each object is described in the following document.

Jamie Shotton etc, "Semantic Texton Forests for Image Categorization and Segmentation", [Search on Heisei 24 September 10], Internet <URL: http://cite seerx.ist.psu.edu/viewdoc/download?doi=10.1.1.145.3036&rep= rep1&type=pdf>

It is noted that no limitation is given to the method for calculating the similarity degree between the captured image of the commodity G and the registration commodity. For example, the similarity degree between the captured image of the commodity G and each of the registration commodities can be calculated as an absolute evaluation or a relative evaluation.

If the similarity degree is calculated as an absolute evaluation, the captured image of the commodity G and each of the registration commodities are compared one by one, and the similarity degree obtained from the comparison result can be adopted as it is. If the similarity degree is calculated as a relative evaluation, the similarity degree is obtained as long as the sum of the similarity degrees between the captured commodity G and each registration commodity becomes 1.0 (100%).

The similarity degree may be a value (similarity degree), which is obtained by comparing the feature amount of the commodity G with the standard feature amount of each commodity registered in the PLU file F1, indicating how much similar the two feature amounts are. The concept of the similarity degree is not limited to the example above. The similarity degree may be a value indicating the degree of coincidence with the feature amount of each registration commodity registered in the PLU file F1, or a value indicating the degree of correlation between the feature amount of the commodity G and the feature amount of each registration commodity in the PLU file F1.

A similarity degree determination section 214 recognizes the registration commodities (commodity IDs) of which similarity degrees among the calculated similarity degrees are greater than a given threshold value as the candidates (commodity candidates) of the commodity G photographed by the image capturing section 104. In a case in which, among the registration commodities of which the similarity degrees are greater than the threshold value, there is one registration commodity of which the similarity degree is far above those of other registration commodities, the similarity degree determination section 214 may decide the one registration commodity as a determined commodity automatically. Further, the comparison standard of similarity degree may be set freely.

A commodity presentation section 215 enables the display and operation section 12 of the commodity reading apparatus 10 to display information relating to the registration commodity that is recognized as the commodity candidate by the similarity degree determination section 214. More specifically, if the record of the registration commodity recognized as the commodity candidate is read from the PLU file F1, the commodity presentation section 215 enables the display and operation section 12 to display a commodity candidate screen based on the record.

Fig. 6 is a diagram illustrating an example of the display of a commodity candidate screen displayed on the display and operation section 12. As shown in Fig. 6, a commodity candidate screen A1 includes a captured image area A11 and a commodity candidate area A12.

The captured image area A11 is used for displaying the captured image acquired by the image acquisition section 211. Further, the image acquired by the image acquisition section 111 may be displayed directly in the captured image area A11.

A manual registration button B1 is provided at an area below the captured image area A11 to instruct the commodity recognition (registration) which is carried out by manually designating a category code or a commodity list. The commodity presentation section 215 enables the display and operation section 12 to display a manual registration screen (not shown) for manually carrying out the recognition (registration) of the commodity G in response to the operation of the manual registration button B1. In addition, the commodity designated through the manual registration screen is processed as the determined commodity.

The commodity candidate area A12 is used for displaying the information relating to the registration commodity recognized as a commodity candidate. The commodity candidate area A12 includes a display area A2. Though it is exemplified in Fig. 6 that four display areas A2 are arranged in the commodity candidate area A12, no limitation is given to the number of the display areas A2. The commodity presentation section 215 displays commodity information (XX, XA, etc.) such as a commodity image, commodity name and the like of the commodity candidate in the display areas A2. Further, the commodity candidates displayed in the commodity candidate area A12 can be selected through a touch panel (not shown) of the display and operation section 12. With the constitution described above, the operator can select a commodity candidate corresponding to the commodity G as the determined commodity from the commodity candidates displayed in the commodity candidate area A12.

An input reception section 216 receives an input operation on the operation section 204. The input reception section 216 receives the input operation on the operation section 204 of the commodity settlement apparatus 20 through the connection I/F 208. For example, the input reception section 216 receives a selection operation of the determined commodity corresponding to the commodity G based on the selection operation for the commodity candidates displayed on the commodity candidate screen.

A sales registration section 217 carries out a sales registration of a corresponding commodity based on the commodity ID and the number of sales quantities received by the input reception section 216. Specifically, the sales registration section 217 records, by referring to the PLU file F1, a notified commodity ID, commodity category, commodity name, unit price and the like corresponding to the commodity ID, and the number of sales quantities in the sales master file to carry out a sales registration.

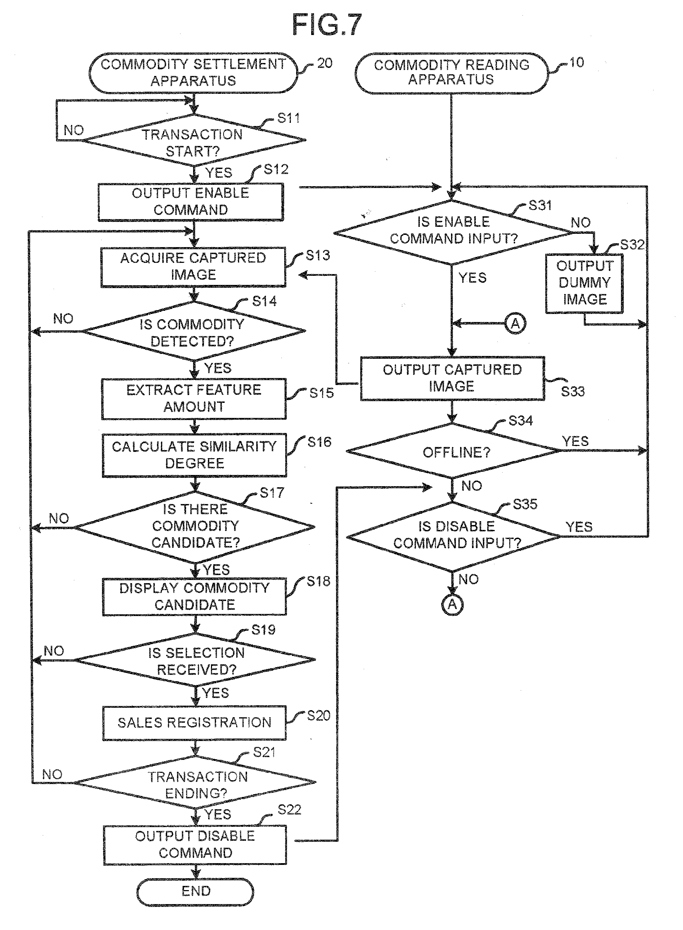

Hereinafter, the operations of a checkout system 1 are described. Fig. 7 is a flowchart illustrating an example of a sales registration processing executed by the commodity reading apparatus 10 and the commodity settlement apparatus 20. Further, it is assumed that the commodity reading apparatus 10 and the commodity settlement apparatus 20 are connected with each other via the connection I/F 106 and the connection I/F 208.

First, the image acquisition section 211 of the commodity settlement apparatus 20 waits for until an instruction of transaction start is received (NO in ACT S11). If the instruction of transaction start is received (YES in ACT S11), the image acquisition section 211 outputs the enable command to the commodity reading apparatus 10 (ACT S12).

On the other hand, during a period of the default state in which the enable command is not being input, the output control section 113 of the commodity reading apparatus 10 enables the image output section 112 to output a dummy image (NO in ACT S31→ACT S32). If an input of the enable command is received (YES in ACT S31), the output control section 113 enables the image output section 112 to output the captured images sequentially (ACT S33).

In the commodity settlement apparatus 20, the image acquisition section 211 sequentially acquires the captured images input from the commodity reading apparatus 10 (ACT S13). Next, the commodity detection section 212 of the commodity settlement apparatus 20 tries to detect the commodity G from the captured image (ACT S14). In a case in which the commodity G cannot be detected from the captured image (NO in ACT S14), the commodity detection section 212 returns to the processing in ACT S13. On the contrary, if the commodity G is detected from the captured image (YES in ACT S14), the commodity detection section 212 proceeds to the processing in ACT S15.

The similarity degree calculation section 213 of the commodity settlement apparatus 20 extracts the feature amount of the commodity G (ACT S15) from the captured image of the commodity G detected in ACT S14. Next, the similarity degree calculation section 213 compares the feature amount extracted in ACT S15 with the feature amount of each registration commodity in the PLU file F1 to calculate the similarity degrees therebetween respectively (ACT S16).

The similarity degree determination section 214 determines whether or not there is a registration commodity of which the similarity degree among the similarity degrees calculated in ACT S16 is greater than the given threshold value (ACT S17). In a case in which there is no registration commodity of which the similarity degree is greater than the threshold value (NO in ACT S17), the similarity degree determination section 214 returns to the processing in ACT S13. On the other hand, if there is a registration commodity of which the similarity degree is greater than the threshold value (YES in ACT S17), the similarity degree determination section 214 recognizes the registration commodity (commodity ID) as the commodity candidate.

Next, the commodity presentation section 215 displays the commodity candidate recognized in ACT S17 in the display and operation section 12 of the commodity reading apparatus 10 (ACT S18). Next, the input reception section 216 determines whether or not a selection of the determined commodity is received through the display and operation section 12 of the commodity reading apparatus 10 (ACT S19). In a case in which the selection operation of the determined commodity is not received (NO in ACT S19), the input reception section 216 returns to the processing in ACT S13.

Further, if the selection operation of the determined commodity is carried out (YES in ACT S19), the input reception section 216 receives the commodity ID of the determined commodity. In a case in which the number of sales quantities is separately input through the display and operation section 12, the input reception section 216 receives the number of sales quantities together with the commodity ID in ACT S20. Further, in a case in which an input of the number of sales quantities is not carried out, the input reception section 216 may input the number of sales quantities "1" as a default value.

Sequentially, the sales registration section 217 reads out the commodity information such as a commodity category, a unit price and the like from the PLU file F1 based on the commodity ID of the determined commodity. Then, the sales registration section 217 records the read commodity information and the number of sales quantities in the sales master file to carry out a sales registration (ACT S20).

Next, the image acquisition section 211 determines whether or not an ending of one transaction is instructed through the operation section 204 (ACT S21). If the transaction is continued (NO in ACT S21), the image acquisition section 211 returns to the processing in ACT S13. On the other hand, if an ending instruction of one transaction is received (YES in ACT S21), the image acquisition section 211 outputs the disable command to the commodity reading apparatus 10 (ACT S22).

On the other hand, during a period the captured images are being output, that is, until the disable command is input, the output control section 113 of the commodity reading apparatus 10 monitors the state of the connection I/F 106 (NO in ACT S34→ NO in ACT S35). If the offline of the connection I/F 106 is detected (YES in ACT S34), the output control section 113 returns to the processing in ACT S31 to suppress the output of captured images. Further, if an input of the disable command is received (YES in ACT S35), the output control section 113 returns to the processing in ACT S31 to suppress the output of captured images.

As stated above, in the commodity reading apparatus 10 of the present embodiment, a dummy image is output to suppress the output of captured images until the enable command is input from the commodity settlement apparatus 20. Further, if the enable command from the commodity settlement apparatus 20 is received, the commodity reading apparatus 10 outputs the captured image to the commodity settlement apparatus 20. In this way, the commodity reading apparatus 10 outputs the captured image to a normal or regular information processing apparatus outputting the enable command, and restricts the output of the captured image to a non-normal or non-regular information processing apparatus which does not output the enable command. Thus, in the commodity reading apparatus 10, since it is possible to suppress the output of captured images which is caused accidentally, outflow of the confidential items can be prevented.

Further, in a case in which the connection I/F 106 is offline while the captured images are being output, the commodity reading apparatus 10 of the present embodiment returns to the default state to suppress the output of captured images. In this way, in the commodity reading apparatus 10, since it is possible to suppress the output of captured images which is caused accidentally, outflow of the confidential items can be prevented.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

For example, it is exemplified in the embodiment described above that the commodity reading apparatus 10 outputs a dummy image at the time of the default state; however, the present invention is not limited to this, and it may not output any image.

Further, for example, the enable command and the disable command are not limited to the plaintext, and may be output in an encrypted state. In such a case, the image acquisition section 211 of the commodity settlement apparatus 20 outputs the enable command and the disable command in the encrypted state. Further, the output control section 113 of the commodity reading apparatus 10 decodes the encrypted enable command and the encrypted disable command to control the output of captured images in response to the content of commands.

Further, in the embodiment above, the programs executed by each apparatus are pre-incorporated in the storage medium (ROM or storage section) of each apparatus; however, the present invention is not limited to this, and the programs may be recorded in a computer-readable recording medium such as CD-ROM, flexible disk (FD), CD-R, DVD (Digital Versatile Disk) in the form of installable or executable file. Further, the storage medium, which is not limited to a medium independent from a computer or an incorporated system, further includes a storage medium for storing or temporarily storing the downloaded programs transferred via a LAN or the Internet.

In addition, the programs executed by each apparatus described in the embodiments above may be provided through a network download or distributed via a network such as the Internet.

## Claims

1. A scanner apparatus, comprising:
an image capturing module configured to perform an image capturing operation;
a connection module configured to be capable of connecting with an external information processing apparatus;
an output module configured to output an image captured by the image capturing module to the information processing apparatus; and
a control module configured to suppress output of the captured image until a first command is input from the information processing apparatus and to output the captured image through the output module if the first command is input from the information processing apparatus.

2. The scanner apparatus according to claim 1, wherein the control module enables the output module to output the captured image if the first command is input from the information processing apparatus, and returns to a state in which no first command is input if a second command is input from the information processing apparatus.

3. The scanner apparatus according to claim 1 or 2, wherein
the control module enables the output module to output a dummy image different from the captured image until the first command is input.

4. The scanner apparatus according to claim 2 or 3, wherein
the control module enables the output module to output a dummy image different from the captured image until the first command is input.

5. The scanner apparatus according to any one of claims 1 to 4, wherein
the control module returns to a state in which no first command is input if the connection module is offline while the captured image is being output.

6. The scanner apparatus according to any one of claims 1 to 5, wherein
the control module enables the image capturing module to start the image capturing operation in response to the input of the first command.

7. A method for outputting a captured image by a scanner apparatus capable of connecting with an information processing apparatus, including:
outputting the captured image to the information processing apparatus;
suppressing output of the captured image until a first command is input from the information processing apparatus; and
outputting the captured image if the first command is input from the information processing apparatus.
